**Europäisches Patentamt**

(19) **European Patent Office**

**Office européen des brevets**

(11) Veröffentlichungsnummer: **0 058 362**
**B1**

(12) # EUROPÄISCHE PATENTSCHRIFT

(45) Veröffentlichungstag der Patentschrift:
11.09.85

(51) Int. Cl.⁴: **B 65 D 39/12, A 47 J 41/02**

(21) Anmeldenummer: **82100872.9**

(22) Anmeldetag: **06.02.82**

(54) Verschlussanordnung eines flaschenartigen Gefässes, insbesondere Isolierkanne.

(30) Priorität: **06.02.81 DE 3104070**

(43) Veröffentlichungstag der Anmeldung:
**25.08.82 Patentblatt 82/34**

(45) Bekanntmachung des Hinweises auf die Patenterteilung:
**11.09.85 Patentblatt 85/37**

(84) Benannte Vertragsstaaten:
**AT BE CH FR GB IT LI LU NL SE**

(56) Entgegenhaltungen:
**CH - A - 277 607**
**DE - A - 1 429 791**
**DE - A - 1 429 806**
**DE - A - 1 429 908**
**DE - A - 1 532 446**
**DE - A - 2 054 275**
**DE - B - 1 284 352**
**DE - B - 1 429 952**
**DE - C - 15 504**
**DE - C - 861 060**
**GB - A - 15 714**
**US - A - 2 946 491**
**US - A - 3 799 408**

(73) Patentinhaber: **EMSA-Werke Wulf GmbH & Co.,
Grevener Damm 215-225, D-4407 Emsdetten (DE)**

(72) Erfinder: **Pegelow, Erich, Jägerstrasse 28,
D-4440 Rheine (DE)**

(74) Vertreter: **Schulze Horn, Stefan, Dipl.-Ing. et al,
Patentanwälte Dipl.-Ing. S. Schulze Horn M.SC. Dr. H.
Hoffmeister Goldstrasse 36, D-4400 Münster (DE)**

**Beschreibung**

Die Erfindung betrifft einen schwenkbeweglich belagerten Klappdeckel für ein flaschenartiges Gefäß, der in seiner Schließstellung eine zum Flaschenhals koaxiale Führung aufweist, mit einem stöpselartigen Verschlußorgan, das zwischen einer oberen und einer unteren Position verschieblich geführt ist, wobei es in der oberen Position eine Stellung im wesentlichen oberhalb des Flaschenhalses und in der unteren Position eine Stellung innerhalb des Flaschenhalses einnimmt.

Bekannt und verbreitet sind Warmhaltekannen mit einem Klappdeckel mit eingebauten sogenannten Dewar-Gefäßen. Weil während des Bewegungsablaufes des Klappdeckels der Stopfen in den Flaschenhals zum Teil geradlinig-vertikal eingeführt werden muß und der Stopfen sich im Flaschenhals zwangsläufig zentriert, ist es notwendig, eine Gelenkverbindung zwischen Schutzbehälter und Klappdeckel mit einem Doppelgelenk zu versehen.

Ein flaschenartiges Gefäß mit einem schwenkbeweglich gehaltenen Deckel ohne Gelenkverbindung zeigt die DE-A-540 273. Als Teil des Verschlußorgans des Deckels ist ein nicht-spreizbarer Kork-Pfropfen vorgesehen, der verstellbar so am Kannendeckel gelagert ist, daß er durch einen von der Außenseite des Deckels oder der Kanne aus bedienbaren Handgriff in den Hals des Isoliergefäßes hineingedrückt oder daraus entfernt werden kann. Dabei ergibt sich der Nachteil, daß bei Überdruck im Inneren des Isolierbehälters der Pfropfen nach oben getrieben wird.

Zur Abhilfe dieses Nachteiles wird daher als erstes Merkmal vorgeschlagen, daß das Verschlußorgan ein an sich bekannter, zwischen einer unteren Spannfläche und einer Gegenspannfläche elastisch spreizbarer Expansionsstopfen ist, dessen untere Spannfläche mit einem aufragenden Führungsschaft versehen ist, der in einer Hülse geführt ist.

Darüber hinaus stellt sich die weitere Aufgabe, den schwenkbeweglichen Deckel so zu gestalten, daß bei Verwendung eines Expansionsstopfens beim Verschwenken und Halten in geöffneter Stellung des Deckels das Verschlußorgan arretiert ist, wobei trotzdem in einfacher Weise der Expansionsstopfen in je eine definierte Öffnungs- und Schließstellung eingestellt werden kann.

Diese Aufgabe wird durch die weiteren Merkmale gelöst, daß der Führungsschaft Teil einer Spannschraube ist, deren Gewindeende mit einer im oberen Teil der Hülse geführten, einen Teil eines Drehknaufes bildenden Gewindemutter verschraubt ist, deren unterer Rand sich gegen einen Bund abstützt, der im Inneren der Hülse angeordnet ist, und daß die Hülse in einer Führung des Klappdeckels axial verschieblich geführt ist und mittels einer Spiralfeder zwischen der die Führung aufweisenden Stirnwand des Klappdeckels und einem Kragen der Hülse elastisch abgestützt ist.

Merkmale, die in weiteren Unteransprüchen genannt sind, werden anhand eines Ausführungsbeispieles der Erfindung erläutert, das in der Zeichnung dargestellt ist. Die Figuren zeigen im einzelnen

Fig. 1 das Oberteil einer Warmhaltekanne mit einem schwenkbeweglich gelagerten Klappdeckel und einem Expansionsstopfen in Verschlußstellung, dargestellt im Schnitt;

Fig. 2 den Klappdeckel gemäß Fig. 1 mit gelöstem Expansionsstopfen und dem Verschlußorgan in der unteren Position ebenfalls im Schnitt;

Fig. 3 den Klappdeckel mit gelöstem Verschlußorgan in der oberen Position, ebenfalls im Schnitt;

Fig. 4 eine Teilansicht der geöffneten Warmhaltekanne mit hochgeklapptem Deckel, teils im Schnitt, teils in Ansicht.

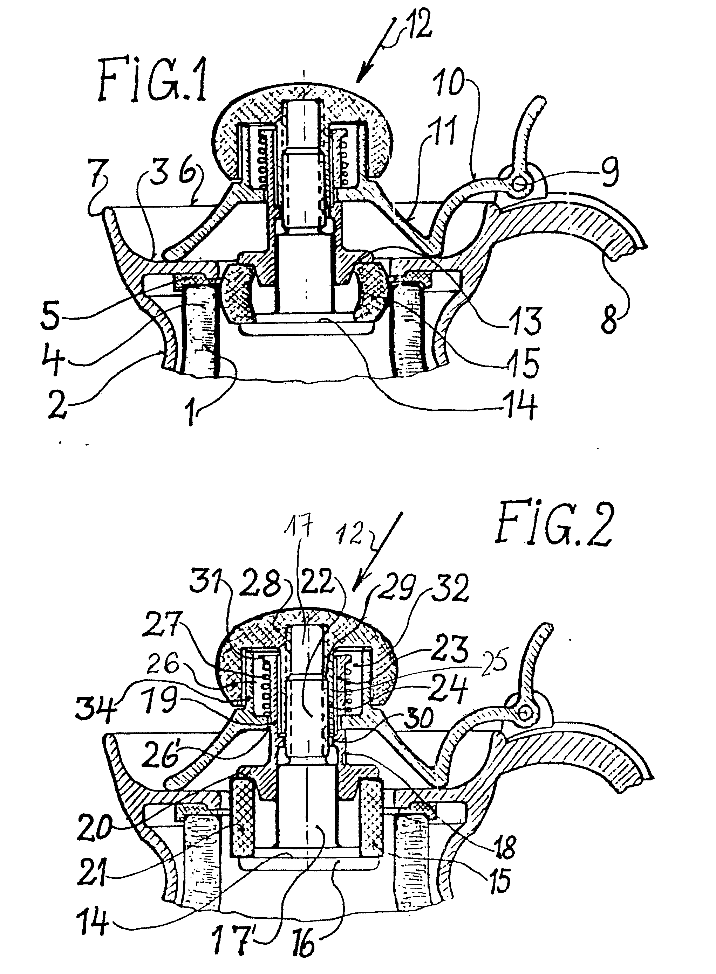

Eine in der Fig. 1 dargestellte Warmhaltekanne setzt sich aus einem Isoliergefäß 1, dem sogenannten Dewar-Gefäß, und einem Schutzbehälter 3 zusammen. Der Schutzbehälter 2 schließt mit einem oberen Rand 3 mit Hilfe einer Dichtung 5 am Hals 4 des Isoliergefäßes 1 dichtend ab. Der obere Rand 3 ist in bekannter Weise als Krage 6 ausgebildet, der an einer Seite eine Gießtülle 7 bildet und an der Gießtülle 7 entgegengesetzten Seite mit einem Henkel 8 versehen ist. Am Henkel 8 befindet sich ein Scharnier 9, in dem ein schwenkbarer Griff 10 gelagert ist, der seinerseits einen Klappdeckel 11 schwenkbar hält.

Mit dem Klappdeckel 11 zu einer Funktionseinheit integriert, bilden ein Verschlußorgan 12 und der als Verschlußorgan aufnehmende Teil des Klappdeckels 11 ein geschlossenes Ganzes, das, wie aus den Fig. 1 bis 4 deutlich erkennbar, eine ästhetisch ausgewogene Form bildet.

Der eigentliche Verschluß des Halses 4 des Isoliergefäßes 1 wird von einem Expansionsstopfen 15 gebildet, der den Hals 4 des Isoliergefäßes 1 absolut dicht abschließt, indem der Stopfen 15 zwischen einer oberen Gegenspannfläche 13 und einer unteren Spannfläche 14 zusammengedrückt wird und sich dadurch in radialer Richtung spreizt.

In der Fig. 2 ist das zum Expansionsstopfen 15 gehörende spreizbare Dichtungselement 21 in entspanntem Zustand dargestellt. Dabei ist zu erkennen, daß die untere Spannfläche 14 vom flachen Kopf 16 einer Schraube 17 gebildet wird, deren Schaft 17′ im unteren Teil 18 einer Hülse 19 geführt wird, während das Gewindeende 22 der Schraube 17 im oberen Teil 23 der Hülse 19 mit einem Gewindeteil 24 einer zu einem Drehknauf 28 gehörenden, mit Muttergewinde 25 versehenen Gewindemuffe 24 verschraubt ist. Das Muttergewinde 25 verbreitert sich dazu an seinem oberen, an die Gewindemuffe 24 anschließenden Ende zu diesem Drehknauf 28, der das Betätigungsorgan der Verschlußanordnung darstellt.

Die Hülse 19 ist mit einer Feder 27 elastisch abgestützt, die zwischen einem Kragen 31 an der Hülse 19 und dem Klappdeckel 11 angeordnet ist und eine Rückstellkraft erzeugt, mit deren Hilfe das Verschlußorgan 12 immer dann in die obere Position zurückgestellt wird, wenn es in entspanntem Zustand freigegeben ist.

Der untere Teil 18 der Hülse 19 ist zu einem Flansch 20 nach außen erweitert und ist damit mit der Gegenspannfläche 13 ausgestattet, die zwischen sich und der unteren Spannfläche 14 das spreizbare Dichtungselement 21 aufnimmt. Im Inneren der Hülse 19 ist ein Bund 30 angeordnet.

Die Funktion der Verschlußanordnung kann wie folgt beschrieben werden:

Beim Zusammendrücken der sich auf den im Inneren der Hülse 19 angeordneten Bund 30 abstützende Gewindemuffe 24 mit dem Gewindeende 22 durch Drehen des Drehknaufes 28 nähern sich die obere Spannfläche 13 und die untere Spannfläche 14 einander, quetschen das spreizbare Dichtungselement 21, so daß es radial nach außen expandiert, und bringen es damit in die Sperrstellung, die in der Fig. 1 dargestellt ist.

Umgekehrt wird der Verschluß gelöst durch öffnendes Drehen des Drehknaufes 28 (üblicherweise bei Rechtsgewinde links herum), wodurch sich die Spannfläche 13 und 14 auseinander bewegend öffnen und das Dichtungselement 21 entspannen, wodurch es in die in der Fig. 2 gezeigte entspannte Lage zurückkehrt.

In der Fig. 2 ist weiter zu erkennen, daß der das Verschlußorgan 12 aufnehmende Teil des Klappdeckels 11 in Form einer nach unten zu offenen Glocke hat, die die beschriebenen Funktionselemente des Verschlußorganes 12 wenigstens teilweise umgibt. Im oberen Bereich des Klappdeckels 11 befindet sich die das Verschlußorgan 12 axial beweglich aufnehmende Führung 26, die aus der zum Deckel 11 konzentrischen Bohrung 26' und einem zylindermantelförmigen Wandteil 34 gebildet ist. Darin ist die Hülse 19 mit der Feder 27 geführt.

Der von dem zylindrischen Wandteil 34 umschlossene Raum 32 wird nach oben zu von dem Rand 33 des Drehknaufes 28 abgeschlossen, der das zylindrische Wandteil 34 übergreift und sich von außen an diesem führt.

Mit dieser Ausgestaltung wird erreicht, daß die vollständig von formschönen Gehäuseteilen des Deckels umkleidete Verschlußanordnung vor dem Eindringen von Schmutz oder Flüssigkeit geschützt ist, und daß darüber hinaus eine befriedigende ästhetische Gesamtwirkung erzielt wird.

Eine in der Bohrung 26' angebrachte Nase, die in einen an der Außenseite der Hülse 19 angebrachten Führungs-Längsschlitz eingreift (beide aus Gründen der Übersichtlichkeit nicht dargestellt), verhindert ein Mitdrehen der Hülse 19 bei der Schraubbetätigung.

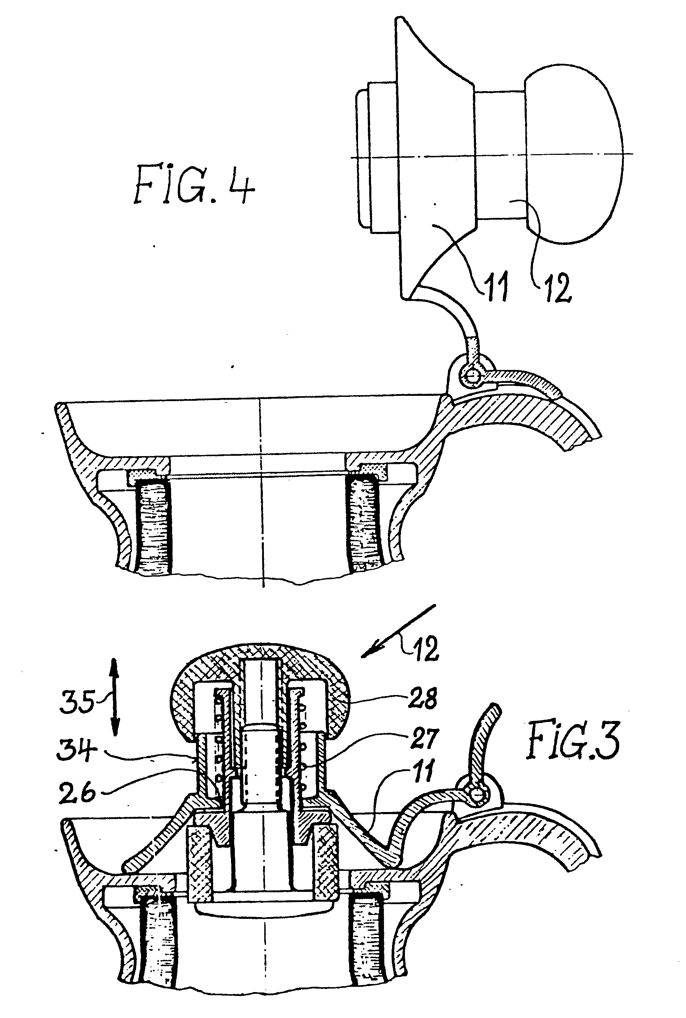

Fig. 3 zeigt das Verschlußorgan 12 mit dem Drehknauf 28 in der entspannten, oberen Position. Dabei läßt der Doppelpfeil 35 die Auf- und Abbewegung des Verschlußorganes 12 in der Führung 26 des Klappdeckels 11 erkennen. Die Feder 27 ist im entspannten Zustand dargestellt.

Aus diesem Zustand und aus dieser Position heraus läßt sich nunmehr — zum Einfüllen oder zum Ausgießen — die Einheit Klappdeckel/Verschlußorgan in die voll geöffnete Stellung verschwenken, wie dies die Fig. 4 zeigt.

Die Herstellung der Elemente des Verschlußorganes, mit Ausnahme der Feder 27 und des Dichtungselementes 21, erfolgt vorzugsweise aus einem formbeständigen Kunststoff.

**Patentansprüche**

1. Schwenkbeweglich gelagerter Klappdeckel für ein flaschenartiges Gefäß, der in seiner Schließstellung eine zum Flaschenhals koaxiale Führung (26) aufweist, mit einem stöpselartigen Verschlußorgan (12), das zwischen einer oberen und einer unteren Position verschieblich geführt ist, wobei es in der oberen Position eine Stellung im wesentlichen oberhalb des Flaschenhalses und in der unteren Position eine Stellung innerhalb des Flaschenhalses einnimmt, dadurch gekennzeichnet,

— daß das Verschlußorgan (12) ein an sich bekannter, zwischen einer unteren Spannfläche (14) und einer Gegenspannfläche (13) elastisch spreiz- und spannbarer Expansionsstopfen (15) ist, dessen untere Spannfläche (14) mit einem aufragenden Führungsschaft (17') versehen ist, der in einer Hülse geführt ist,

— daß der Führungsschaft (17') Teil einer Spannschraube (17) ist, deren Gewindeende (22) mit einem im oberen Teil der Hülse (19) geführten, einen Teil eines Drehknaufes (28) bildenden Gewindeteil (24) verschraubt ist, der sich gegen einen Bund (30) abstützt, der im Inneren der Hülse (19) angeordnet ist,

— und daß die Hülse (19) in einer Führung (26) des Klappdeckels (11) axial verschieblich geführt und mit einer Spiralfeder (27) elastisch abgestützt ist.

2. Klappdeckel nach Anspruch 1, dadurch gekennzeichnet, daß die Führung (26) aus einer Bohrung (26') und einem nach oben offenen, zylindrischen Wandteil (34) gebildet ist, wodurch ein Raum (32) geschaffen ist, der den nach oben durch die Bohrung (26') durchtretenden, von der Spiralfeder (27) unterstützten Teil (23) der Hülse (19) nach außen abschließt, und daß der Drehknauf (28) den Wandteil (34) außen übergreift und nach oben abschließt, wobei der obere Rand des Wandteils (34) den Anschlag für die untere Position des Verschlußorganes (12) bildet.

3. Klappdeckel nach Anspruch 1 oder 2, dadurch gekennzeichnet, daß die Gegenspannfläche (13) in der oberen Position des Verschlußorganes (12) an die Stirnseite der Führung (26) anschlägt.

4. Klappdeckel nach einem der Ansprüche 1 bis 3, dadurch gekennzeichnet, daß mit Ausnahme der Feder (27) und des Dichtungselementes (21) des Expansionsstopfens (15), alle Teile aus einem formbeständigen Kunststoff hergestellt sind.

## Claims

1. A pivotably mounted cover for a bottle like receptacle, which cover has in its closed position a guide means (26) disposed coaxial to the bottle neck, said cover comprising a stopper-like closure member (12) movably guided between an upper position and a lower position, and assuming in its upper position, a location substantially above the bottle neck, and in its lower position, a location interiorly of the bottle neck, characterized in that

— the closure member (12) is a known per se expansion stopper (15) being resiliently expansible and stretchable between a lower clamping surface (14) and a counter clamping surface (13), with the lower clamping surface (14) of said stopper being provided with an upstanding guide stem (17') guided with-in a sleeve,

— that the guide stem (17') is a part of a tensioning screw (17) the threaded end of which is screwed into a threaded portion (24) guided in the upper portion of the sleeve (19) and forming a part of a turning handle (28), the threaded portion resting on a collar (30) which is disposed in the interior of the sleeve (19),

— and that the sleeve (19) is guided for axial movement within a guide means (26) of the snap cover (11) and resiliently supported by a helical spring (27).

2. The cover according to claim 1, characterized in that the guide means (26) is formed of a bore (26') and an upwards open cylindrical wall portion (34), thereby defining a space (32) which encloses relative to the exterior the part (23) of the sleeve (19) extending upwards through the bore (26') and being supported by the helical spring (19); and that the turning handle (28) overlaps the wall portion (34) on its outer side and covers said wall portion at the upper end, with the upper edge of the wall portion (34) defining the abutment for the lower position of the closure member (12).

3. The snap cover according to claims 1 or 2, characterized in that the counter clamping surface (13) abuts the front side of the guide means (26) in the upper position of the closure member (12).

4. The snap cover according to any one of claims 1 to 3, characterized in that all components, with the exception of the spring (27) and the sealing element (21) of the expansion stopper (15), are formed of a dimensionally stable plastics material.

## Revendications

1. Couvercle à charnière articulé et oscillant pour un récipient en forme de bouteille qui présente, en position de fermeture, un guidage (26) coaxial au goulot de la bouteille, avec un organe de fermeture (12) en forme de bouchon qui est guidé de façon mobile entre une position supérieure et une position inférieure, de façon à prendre dans la position supérieure une place située sensiblement au-dessus du goulot de la bouteille et à venir dans la position inférieure à une place située à l'intérieur du goulot de la bouteille, caractérisé en ce que l'organe de fermeture (12) est un bouchon d'expansion (15) élastique, dilatable et compressible et disposé entre une surface de butée inférieure (14) et une surface de butée opposée (13), la surface de butée inférieure (14) étant munie d'une tige de guidage en saillie (17'), guidée dans un manchon, en ce que la tige de guidage (17') est une partie d'une vis de serrage (17) dont l'extrémité filetée (22) est vissée dans une partie filetée (24) formant une partie d'un bouton tournant (28) à la partie supérieure du manchon (19), cette partie filetée venant en appui contre un collet (30) disposé à l'intérieur du manchon (19), et en ce que le manchon (19) est guidé axialement de façon mobile dans un guidage (26) du couvercle à charnière (11) et est repoussé élastiquement par un ressort spiral (27).

2. Couvercle à charnière selon la revendication 1, caractérisé en ce que le guidage (26) est constitué par un alésage (26') et une partie de paroi (34) cylindrique et ouverte vers le haut, de façon à créer un espace (32) qui obture vers l'extérieur la partie (23) du manchon retenant le ressort spiral (27) et traversée vers le haut par l'alésage (26') et en ce que le bouton tournant (28) enveloppe la partie de paroi (34) à l'extérieur et la ferme vers le haut, la partie supérieure de la partie de paroi (34) constituant la butée pour la position inférieure de l'organe de fermeture (12).

3. Couvercle à charnière selon la revendication 1 ou 2, caractérisé en ce que la surface de butée opposée (13) vient en butée en position haute de l'organe de fermeture (12) sur la face frontale du guidage (26).

4. Couvercle à charnière selon l'une des revendications 1 à 3, caractérisé en ce qu'à l'exception du ressort (27) et de l'élément d'étanchéité (21) du bouchon d'expansion (15), toutes ces parties sont réalisées en un matériau synthétique présentant une stabilité dimensionnelle.

FIG.1

FIG.2

0 058 362

FIG.4

11  12

12

35
34
26
28
27
11

FIG.3

7